# EUROPEAN PATENT SPECIFICATION

(11) **EP 3 301 339 B1**
(45) Date of publication and mention of the grant of the patent: **22.07.2020**
(21) Application number: 17191733.9
(22) Date of filing: 19.09.2017
(51) Int. Cl.: F16L 25/00, B21D 39/04, B25B 27/10, F16L 33/207, F16L 33/26

(54) **ASSEMBLY OF A PRESS-FITTING CONNECTOR AND A CORRUGATED PIPE AND KIT COMPRISING THE ASSEMBLY AND A PRESS-FITTING TOOL FOR ITS APPLICATION**
PRESSVERBINDER UND WELLROHR ANORDNUNG UND KIT MIT DIESER ANORDNUNG UND EINEM PRESSVERBINDUNGSWERKZEUG ZU DESSEN ANWENDUNG
ENSEMBLE COMPRENANT UN CONNECTEUR D'ASSEMBLAGE PAR PRESSION ET UN TUBE ONDULÉ ET KIT COMPRENANT CET ENSEMBLE ET UN OUTIL D'ASSEMBLAGE PAR PRESSION POUR SON APPLICATION

(30) Priority: 28.09.2016 IT 201600097128
(43) Date of publication of application: 04.04.2018
(73) Proprietor: EUROTIS S.r.l., 20094 Corsico, MI (IT)
(72) Inventor: Dall'Era, Pierdomenico, 25070 Sabbio Chiese (BS) (IT)
(74) Representative: Modiano, Micaela Nadia

(56) References cited:
- EP-A1- 0 955 493
- DE-U1- 20 300 918
- JP-A- 2000 240 861
- JP-A- 2009 168 075
- US-A1- 2015 292 661
- US-A1- 2015 321 238
- US-B1- 8 584 503

## Description

The present invention relates to an assembly of a press-fitting connector and a corrugated pipe and a kit comprising the assembly and a press-fitting tool for its application.

Press-fitting connectors are known for carrying out the connection of pipes, both metallic, for example copper and steel, and multilayer, i.e. metal and plastic material, to components of various types or to each other. Such connectors are generally constituted by a sleeve-like portion, which can be mated with the component to be connected to the pipe or integrated in the component itself, into which an end portion of the pipe to be connected is inserted. This sleeve-like portion defines an opening for the pipe and has, on its internal lateral surface, at least one circumferential seat in which a gasket is accommodated. Generally, inside the connector there is an axial shoulder against which the end of the pipe engages when it is inserted through the opening of the sleeve-like portion, so as to delimit the portion of pipe that is inserted into the connector.

The sleeve-like portion can be cold-deformed plastically by way of a clamping tool that causes the clamping of the sleeve-like portion around the end portion of the pipe which is inserted into the connector. This clamping axially locks the pipe with respect to the connector and presses the gasket or gaskets against the external lateral surface of the pipe. In this manner, one obtains the mechanical seal, i.e. the locking in place of the pipe in the connector, and the hydraulic or pneumatic seal between the pipe and the connector.

There exist several types of press-fitting connectors and corresponding tools for carrying out the plastic deformation of the sleeve-like portion, which are generally designed for smooth pipes and that is to say for pipes with a smooth external and internal lateral surface.

Press-fitting connectors are also known for corrugated pipes, such as for example the connector described in Italian utility model patent no. 278,570.

Corrugated pipes are nowadays made of various different materials and are used in many sectors of plant engineering in general. In particular, corrugated pipes made of stainless steel are widely used in the heating and sanitary water sectors, and in the sector of solar heating systems and of gas and industrial plants; these pipes represent a valid alternative to smooth pipes, be they made of metal, for example copper and stainless steel, or multilayer.

The shape structure of corrugated pipes, which have a wave-like lateral surface both internally and externally, defined by circumferential protrusions alternating with circumferential recesses, undoubtedly make it more difficult to carry out their connection to components or to each other by way of the press-fitting technique (which would be preferable because it is faster and cheaper), thus requiring the use of other techniques that require special preparations of the end of the pipe and the use of specific components, such as for example the technique of flaring or flanging.

Besides, the press-fitting connectors experimented with until now have not given entirely satisfactory results in terms of mechanical and hydraulic/pneumatic seal, reliability, and lifetime.

DE 203 00 918, JP 2000 240861, JP 2009 168075 and US 8584 503 disclose connectors for tubes but not corrugated tubes. US 2015/321238 discloses a press-fitting tool.

The aim of the present invention is to solve the above mentioned problems, by providing a press-fitting connector for corrugated pipes that ensures that fully satisfactory results are obtained with regard to the mechanical and hydraulic or pneumatic seal in the connection of corrugated pipes.

Within this aim, an object of the invention is to provide an assembly of a connector and a corrugated pipe that offers adequate seal guarantees in a very broad range of operating pressures and temperatures.

Another object of the invention is to provide a press-fitting connector of the assembly that is highly competitive compared to the techniques currently employed to carry out the connection of corrugated pipes to components for heating and sanitary water or to each other.

A further object of the invention is to provide a kit comprising the assembly and specific press-fitting tool for the application of the connector to the corrugated pipe.

This aim and these and other objects which will become better apparent hereinafter are achieved by an assembly of a press-fitting connector and a corrugated pipe wherein the press-fitting connector comprises a connector body provided with a sleeve-like portion that can be cold-deformed plastically and defines, at an axial end thereof, an opening for the insertion of the corrugated pipe; said sleeve-like portion having, on its internal lateral surface, a circumferential seat that accommodates an annular gasket arranged around the axis of said sleeve-like portion; in said connector body, in a region axially spaced apart from said opening, there being an axial supporting shoulder for the end of the corrugated pipe, which is inserted into said sleeve-like portion through said opening, characterized in that said sleeve-like portion has, at said opening, an annular protrusion that protrudes toward the axis of said sleeve-like portion and in that, on the external lateral surface of said sleeve-like portion, there are preset engagement regions, which are axially mutually spaced apart, for a press-fitting tool adapted to produce a plastic deformation of said sleeve-like portion toward its axis for the engagement of said annular protrusion in a recess of the external lateral surface of the corrugated pipe and for the engagement of said annular gasket with the external lateral surface of the corrugated pipe.

Further characteristics and advantages of the invention will become better apparent from the description of a preferred, but not exclusive, embodiment of the assembly according to the invention, which is illustrated by way of non-limiting example in the accompanying drawings wherein:

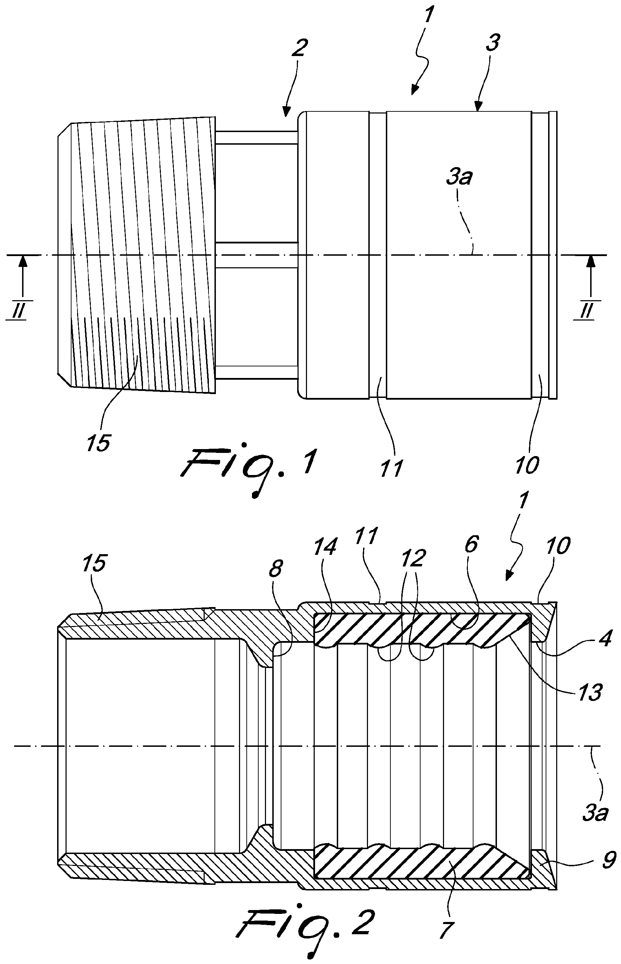

Figure 1 is a side view of the connector according to the invention;
Figure 2 is a cross-sectional view of Figure 1 taken along the line II-II;

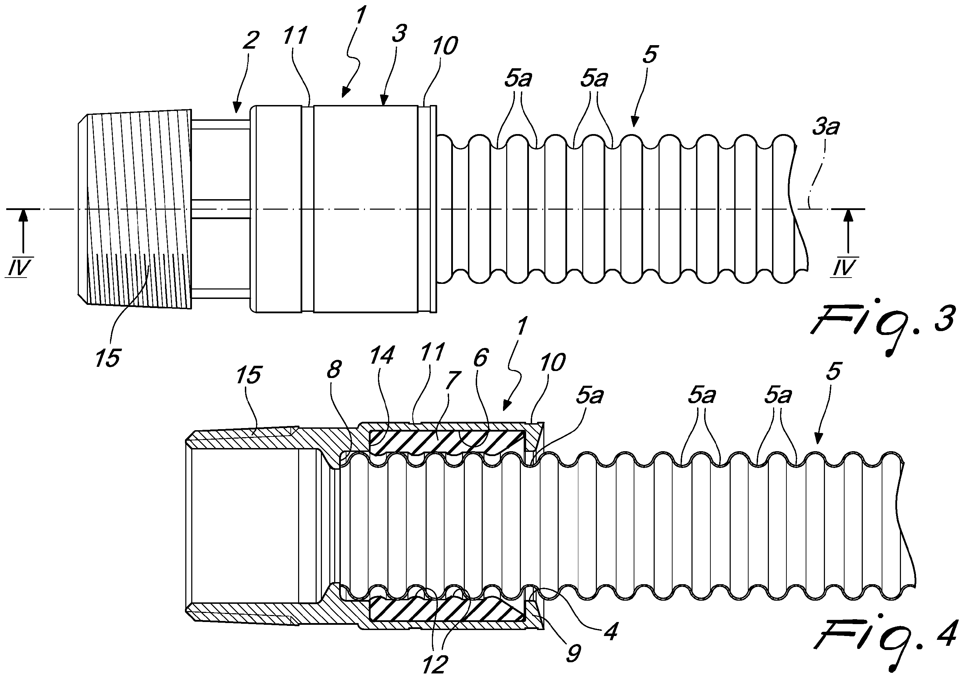

Figure 3 shows the connector according to the invention with a corrugated pipe inserted, prior to pressing the connector;
Figure 4 is a cross-sectional view of Figure 3 taken along the line IV-IV;

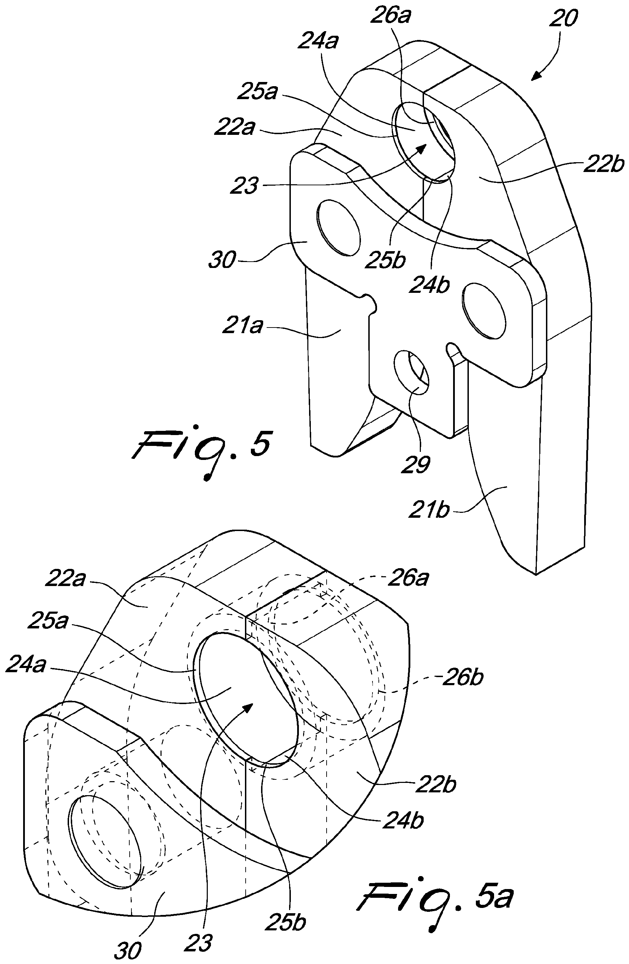

Figure 5 is a front perspective view of the tool for the application of the connector according to the invention;
Figure 5a is an enlarged detail of Figure 5;

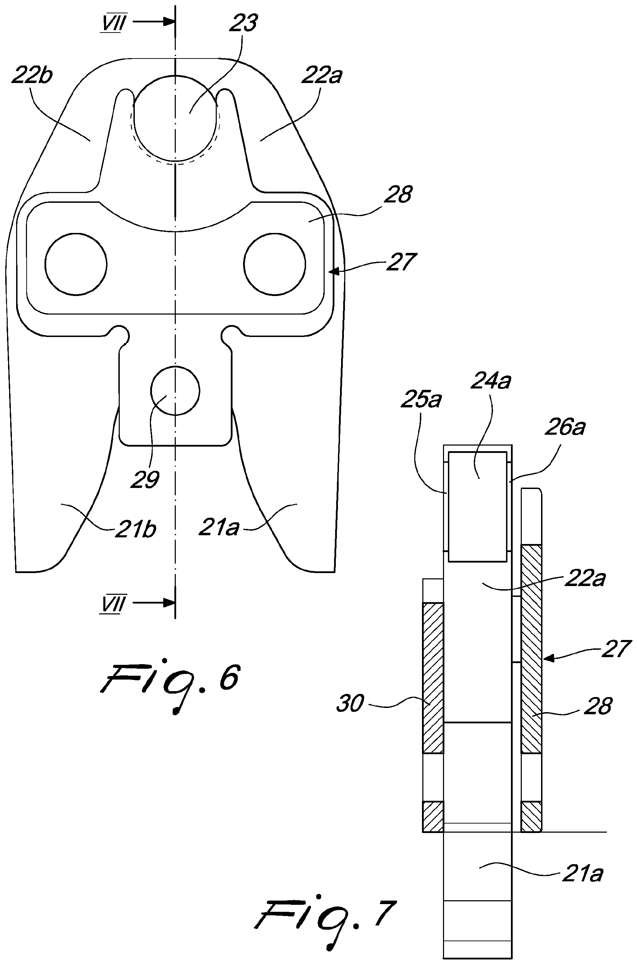

Figure 6 is a rear elevation view of the tool in Figure 5;
Figure 7 is a cross-sectional view of Figure 6 taken along the line VII-VII;

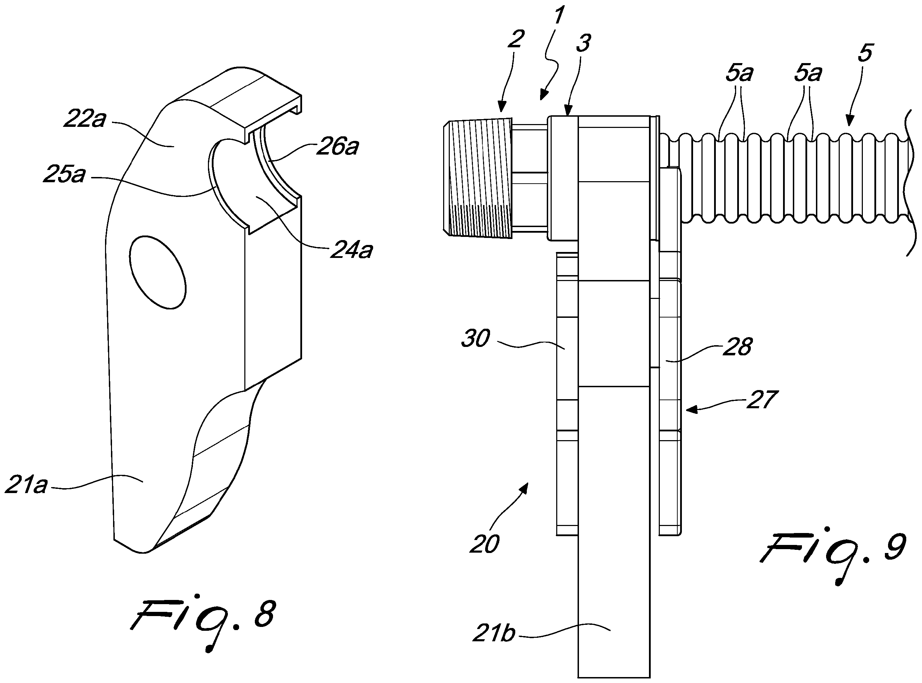

Figure 8 is a perspective view of a part of the tool in Figure 5;
Figure 9 is a side view of the tool of Figure 5 engaged with the sleeve-like portion of the connector according to the invention, in preparation for its pressing;

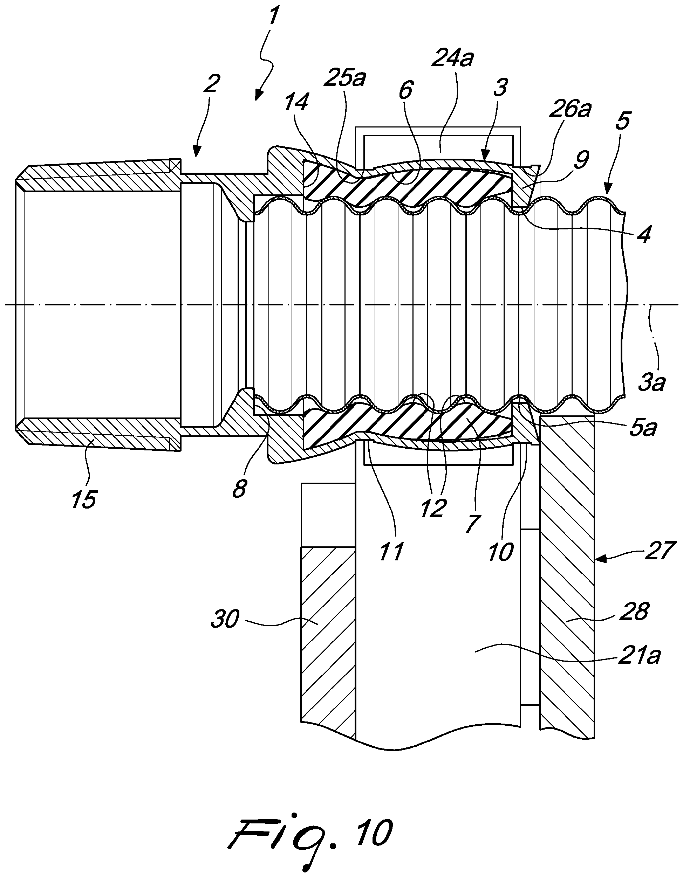

Figure 10 is a cross-sectional view of the connector according to the invention with the corrugated pipe inserted, similarly to Figure 4, during the pressing of the sleeve-like portion by virtue of the action of the tool in Figure 5;

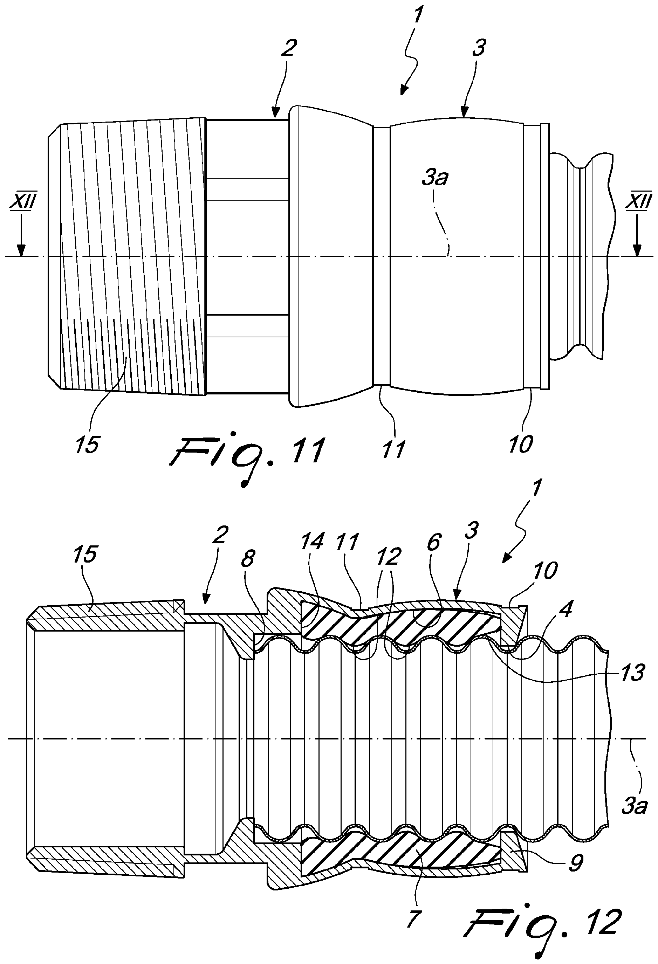

Figure 11 is a side view of the connector according to the invention with the corrugated pipe inserted, after the pressing the sleeve-like portion;
Figure 12 is a cross-sectional view of Figure 11, taken along the line XII-XII.

With reference to the figures, the press-fitting connector of the assembly according to the invention, generally designated by the reference numeral 1, comprises a connector body 2 that has a sleeve-like portion 3 that can be cold-deformed plastically and defines, at an axial end thereof, an opening 4 for the insertion of an end portion of a corrugated pipe 5 into the sleeve-like portion 3.

The connector body 2, in particular considering the sleeve-like portion 3, can be made of metal, such as for example brass, bronze, copper, steel or also of synthetic material.

The sleeve-like portion 3 has a substantially cylindrical shape structure and, on its internal lateral surface, at least one circumferential seat 6 is defined that accommodates an annular gasket 7 that extends about the axis 3a of the sleeve-like portion 3.

In the connector body 2, in a region that is axially spaced apart from the opening 4, there is an axial supporting shoulder 8 for the end of the corrugated pipe 5, which is inserted into the sleeve-like portion 3 through the opening 4. Such axial supporting shoulder 8 is defined by a reduction in diameter of the passage that passes through the connector body 2 starting from the opening 4.

According to the invention, the sleeve-like portion 3 has, at the opening 4, an annular protrusion 9 that protrudes toward the axis 3a of the sleeve-like portion 3 and, on the external lateral surface of the sleeve-like portion 3, there are preset engagement regions 10, 11, which are axially mutually spaced apart, for a press-fitting tool 20 which is adapted to produce a plastic deformation of the sleeve-like portion 3 toward its axis 3a so as to cause the engagement of the annular protrusion 9 in one of the recesses 5a of the external surface of the corrugated pipe 5 and the engagement of the annular gasket 7 with the external surface of the corrugated pipe 5.

Preferably, the preset engagement regions 10, 11 are at least two in number and they are axially mutually spaced apart on the external lateral surface of the sleeve-like portion 3.

Conveniently, a preset engagement region 10 is defined at the annular protrusion 9 and that is to say proximate to the axial end of the sleeve-like portion 3 in which the opening 4 is defined.

Conveniently, the other preset engagement region 11 is defined in the region of the circumferential seat 6 that accommodates the annular gasket 7.

Preferably, the preset engagement regions 10, 11 are constituted by circumferential grooves that extend about the axis 3a of the sleeve-like portion 3 and which can be engaged by the press-fitting tool 20, as will be better described below.

Advantageously, the internal lateral surface of the annular gasket 7 is provided with circumferential protrusions 12 that can engage with all or part of the recesses 5a that are present on the external lateral surface of the portion of corrugated pipe 5 that is inserted into the sleeve-like portion 3.

The axial end of the annular gasket 7 that is directed toward the opening 4 can be provided with a flaring 13 in order to facilitate the insertion of the corrugated pipe 5.

The circumferential seat 6 that accommodates the annular gasket 7 is delimited axially, on one side, by the annular protrusion 9 and, on the opposite side, by an axial shoulder 14 which is defined by a reduction in diameter of the internal lateral surface of the sleeve-like portion 3.

The connector body 2 can be integrated in the heating and sanitary water component, for example a valve, a distributor, a manifold or the like, to which the corrugated pipe 5 is to be connected, or it can be provided with means for mating with such component, such as for example a conical threaded portion 15, as in the embodiment shown, or a female threading or other conventional connecting element.

If the connector 1 is to be used for connecting two or more corrugated pipes 5 to each other, the connector body 2 can be provided with two or more sleeve-like portions 3, in a similar manner to what is described in Italian utility model no. 278,570.

A press-fitting tool 20 for the application of the connector 1 comprised in the kit according to the invention comprises a clamp-like tool composed of two branches 21a, 21b which are hinged to a supporting plate 30 at an intermediate region thereof and have a pair of mutually facing jaws 22a, 22b which define a substantially cylindrical hole 23 that can be engaged around the sleeve-like portion 3 of the connector 1.

Such hole 23 is composed of two semi-cylindrical hollows 24a, 24b, which are defined respectively in each one of the jaws 22a, 22b of the clamp-like tool.

On the lateral surface of the semi-cylindrical hollows 24a, 24b, there are protrusions 25a, 25b, 26a, 26b that extend circumferentially about the axis of the semi-cylindrical hollows 24a, 24b. These protrusions 25a, 25b, 26a, 26b are axially mutually spaced apart so as to correspond to the existing spacing between the preset engagement regions 10, 11 of the sleeve-like portion 3 so as to be able to engage, with precision, with the preset engagement regions 10, 11. The free end of such protrusions 25a, 25b, 26a, 26b extends along a cylindrical surface that has a smaller diameter than the external diameter of the sleeve-like portion 3 at the preset engagement regions 10, 11 so as to produce a plastic deformation of the sleeve-like portion 3 upon the clamping of the jaws 22a, 22b of the clamp-like tool around the sleeve-like portion 3 of the connector 1.

Each one of the protrusions 25a, 25b, 26a, 26b of the semi-cylindrical hollows 24a, 24b can engage in a corresponding circumferential groove that constitutes a preset engagement region 10 or 11 defined on the external lateral surface of the sleeve-like portion 3 of the press-fitting connector 1.

Advantageously, the tool 20 is provided with means 27 of positioning the clamp-like tool with respect to the sleeve-like portion 3 of the press-fitting connector 1 so as to obtain the secure engagement of the protrusions 25a, 25b, 26a, 26b with the circumferential grooves that constitute the preset engagement regions 10, 11.

Such positioning means 27 comprise an arm 28 associated with the clamp-like tool. One end of this arm 28 is fork-shaped, which can be fitted over the corrugated pipe 5, and it can rest against the axial end of the sleeve-like portion 3 in which the opening 4 is defined.

The press-fitting tool 20 can be actuated manually or mechanically by way of a conventional pressing machine on which the press-fitting tool 20 can be mounted, and locked in place using a hole 29 provided on the plate 30 which supports the two branches 21a, 21b, similarly to conventional tools for carrying out the clamping of the press-fitting connectors for smooth pipes.

Application of the press-fitting connector 1 comprised in the kit according to the invention to the end of a corrugated pipe 5 is carried out by inserting an end portion of a corrugated pipe 5 into the sleeve-like portion 3 through the opening 4 until the end of the pipe 5 comes up against the axial supporting shoulder 8. Placing the end of the pipe 5 against this axial shoulder 8 ensures the correct positioning of the corrugated pipe 5 with respect to the sleeve-like portion 3.

Subsequently, the press-fitting tool 20 is brought to encompass the sleeve-like portion 3, with its jaws 22a, 22b open. The positioning of the press-fitting tool 20 is carried out by placing the arm 28 against the axial end of the sleeve-like portion 3 in which the opening 4 is defined. This placing ensures that the protrusions 25a, 25b, 26a, 26b on the semi-cylindrical hollows are situated at the preset engagement regions 10, 11.

Subsequently, the press-fitting tool 20 is actuated so as to cause the closing and the clamping of the jaws 22a, 22b around the sleeve-like portion 3.

This clamping of the jaws 22a, 22b results in the plastic deformation of the sleeve-like portion 3 which tightens around the end portion of the corrugated pipe 5 inserted into it.

More specifically, this clamping, by virtue of the particular position of the preset engagement regions 10, 11, results in the annular protrusion 9 moving toward the axis 3a of the sleeve-like portion 3 and its engagement inside one of the recesses 5a of the corrugated pipe 5. This ensures that the corrugated pipe 5 cannot disengage from the connector 1 by sliding out from the sleeve-like portion 3.

The clamping of the sleeve-like portion 3, again by virtue of the particular position of the preset engagement regions 10, 11, causes the annular gasket 7 to be pressed against the external lateral surface of the portion of corrugated pipe 5 inserted into the sleeve-like portion 3, thus ensuring the hydraulic or pneumatic seal between the pipe and the connector 1.

In practice it has been found that the press-fitting connector comprised in the kit according to the invention fully achieves the set aim since it makes it possible to obtain fully satisfactory results both with regard to the mechanical seal and with regard to the hydraulic or pneumatic seal in the connection with corrugated pipes.

Another advantage of the press-fitting connector comprised in the assembly according to the invention is that the application thereof is particularly simple and rapid.

The connector, as well as the tool for its application, thus conceived, are susceptible of numerous modifications and variations all of which are within the scope of the appended claims; moreover, all the details may be substituted by other, technically equivalent elements.

In practice the materials employed, and the dimensions, may be any according to requirements and to the state of the art.

The application claims the priority of the Italian Patent Application No. 102016000097128 (UA2016A006892).

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An assembly of a press-fitting connector (1) and a corrugated pipe, wherein the press-fitting connector (1) comprises a connector body (2) provided with a sleeve-like portion (3) that can be cold-deformed plastically and defines, at an axial end thereof, an opening (4) for the insertion of the corrugated pipe (5); said sleeve-like portion (3) having, on its internal lateral surface, a circumferential seat (6) that accommodates an annular gasket (7) arranged around the axis (3a) of said sleeve-like portion (3); in said connector body (2), in a region axially spaced apart from said opening (4), there being an axial supporting shoulder (8) for the end of the corrugated pipe (5), which is inserted into said sleeve-like portion (3) through said opening (4), wherein said sleeve-like portion (3) has, at said opening (4), an annular protrusion (9) that protrudes toward the axis (3a) of said sleeve-like portion (3) and in that, on the external lateral surface of said sleeve-like portion (3), there are preset engagement regions (10, 11), which are axially mutually spaced apart, for a press-fitting tool (20) adapted to produce a plastic deformation of said sleeve-like portion (3) toward its axis (3a) for the engagement of said annular protrusion (9) in a recess (5a) of the external lateral surface of the corrugated pipe (5) and for the engagement of said annular gasket (7) with the external lateral surface of the corrugated pipe (5).

2. The assembly according to claim 1, **characterized in that** said preset engagement regions (10, 11) comprise two preset engagement regions (10, 11) which are axially mutually spaced apart on the external lateral surface of said sleeve-like portion (3).

3. The assembly according to claims 1 and 2, **characterized in that** one of said preset engagement regions (10, 11) is defined at said annular protrusion (9).

4. The assembly according to one or more of the preceding claims, **characterized in that** one of said preset engagement regions (10, 11) is defined at said circumferential seat (6) that accommodates said annular gasket (7).

5. The assembly according to one or more of the preceding claims, **characterized in that** said preset engagement regions (10, 11) are constituted by circumferential grooves that extend around the axis (3a) of said sleeve-like portion (3) and can be engaged by said press-fitting tool (20).

6. The assembly according to one or more of the preceding claims, **characterized in that** the internal lateral surface of said annular gasket (7) is provided with circumferential protrusions (12) that can engage with recesses (5a) of the external lateral surface of the corrugated pipe (5) inserted into said sleeve-like portion (3).

7. The assembly according to one or more of the preceding claims, **characterized in that** said circumferential seat (6) that accommodates said annular gasket (7) is delimited axially, on one side, by said annular protrusion (9) and, on the opposite side, by an axial shoulder (14) defined by a reduction in diameter of the internal lateral surface of said sleeve-like portion (3).

8. A kit comprising the assembly according to one or more of the preceding claims and a press-fitting tool (20) for the application of a press-fitting connector (1) of the assembly, wherein the press fitting tool (20) comprises a clamp-like tool having a pair of mutually facing jaws (22a, 22b) which define a substantially cylindrical hole (23) that can be engaged around said sleeve-like portion (3) of the press-fitting connector (1), said hole (23) being composed of two semi-cylindrical hollows (24a, 24b) defined respectively in each one of said jaws (22a, 22b), **characterized in that** on the lateral surface of said semi-cylindrical hollows (24a, 24b) there are protrusions (25a, 25b, 26a, 26b) that extend circumferentially around the axis of said semi-cylindrical hollows (24a, 24b), said protrusions (25a, 25b, 26a, 26b) being axially mutually spaced apart so as to correspond to said preset engagement regions (10, 11) in order to engage with said preset engagement regions (10, 11) and their free ends being extended along a cylindrical surface that has a smaller diameter than the external diameter of said sleeve-like portion (3) at said preset engagement regions (10, 11) in order to produce a plastic deformation of said sleeve-like portion (3) upon the clamping of said jaws (22a, 22b) around said sleeve-like portion (3).

9. The kit according to claim 8, **characterized in that** each one of said protrusions (25a, 25b, 26a, 26b) of the semi-cylindrical hollows (24a, 24b) can engage in a corresponding one of said circumferential grooves (10, 11) that are defined on the external lateral surface of said sleeve-like portion (3) of the press-fitting connector (1).

10. The kit according to one or more of the preceding claims 8 and 9, **characterized in that** it comprises means (27) of positioning said clamp-like tool with respect to said sleeve-like portion (3) of the press-fitting connector (1).

11. The kit according to clam 10, **characterized in that** said positioning means (27) comprise an arm (28) that is associated with said clamp-like tool and can rest against the axial end of said sleeve-like portion (3) in which said opening (4) is defined.

## Patentansprüche

1. Eine Pressverbinder- und Wellrohr-Anordnung (1), wobei der Pressverbinder (1) einen Verbinderkörper (2) umfasst, der mit einem hülsenartigen Abschnitt (3) versehen ist, welcher plastisch kaltverformt werden kann und an einem axialen Ende desselben eine Öffnung (4) zum Einführen des Wellrohrs (5) bestimmt, wobei der hülsenartige Abschnitt (3) an seiner inneren Seitenfläche einen Umfangssitz (6) hat, der eine ringförmige Dichtung (7) enthält, welche um die Achse (3a) des hülsenartigen Abschnitts (3) herum angeordnet ist, wobei sich in dem Verbinderkörper (2), in einem Bereich, der axial von der Öffnung (4) beabstandet ist, eine axiale Stützschulter (8) für das Ende des Wellrohrs (5) befindet, das durch die Öffnung (4) in den hülsenartigen Abschnitt (3) eingeführt ist, wobei der hülsenartige Abschnitt (3) an der Öffnung (4) einen ringförmigen Vorsprung (9) hat, der zur Achse (3a) des hülsenartigen Abschnitts (3) hin ragt, und dadurch dass, sich an der äußeren Seitenfläche des hülsenartigen Abschnitts (3) vordefinierte Eingriffsbereiche (10, 11) befinden, die axial voneinander beabstandet sind, für ein Pressverbindungswerkzeug (20), das ausgebildet ist, um eine plastische Verformung des hülsenartigen Abschnitts (3) zu seiner Achse (3a) hin zu erzeugen, zum Zwecke des Eingriffs des ringförmigen Vorsprungs (9) in eine Vertiefung (5a) der äußeren Seitenfläche des Wellrohrs (5) und zum Zwecke des Eingriffs der ringförmigen Dichtung (7) in die äußere Seitenfläche des Wellrohrs (5).

2. Die Anordnung gemäß Anspruch 1, **dadurch gekennzeichnet, dass** die vordefinierten Eingriffsbereiche (10, 11) zwei vordefinierte Eingriffsbereiche (10, 11) umfassen, die an der äußeren Seitenfläche des hülsenartigen Abschnitts (3) axial voneinander beabstandet sind.

3. Die Anordnung gemäß den Ansprüchen 1 und 2, **dadurch gekennzeichnet, dass** einer der vordefinierten Eingriffsbereiche (10, 11) an dem ringförmigen Vorsprung (9) bestimmt ist.

4. Die Anordnung gemäß einem oder mehreren der obigen Ansprüche, **dadurch gekennzeichnet, dass** einer der vordefinierten Eingriffsbereiche (10, 11) an dem Umfangssitz (6) bestimmt ist, der die ringförmige Dichtung (7) aufnimmt.

5. Die Anordnung gemäß einem oder mehreren der obigen Ansprüche, **dadurch gekennzeichnet, dass** die vordefinierten Eingriffsbereiche (10, 11) aus Umfangsnuten bestehen, die sich um die Achse (3a) des hülsenartigen Abschnitts (3) herum erstrecken und in welche das Pressverbindungswerkzeug (20) eingreifen kann.

6. Die Anordnung gemäß einem oder mehreren der obigen Ansprüche, **dadurch gekennzeichnet, dass** die innere Seitenfläche der ringförmingen Dichtung (7) mit Umfangsvorsprüngen (12) versehen ist, die in Vertiefungen (5a) der äußeren Seitenfläche des Wellrohrs (5) eingreifen können, das in den hülsenartigen Abschnitt (3) eingeführt ist.

7. Die Anordnung gemäß einem oder mehreren der obigen Ansprüche, **dadurch gekennzeichnet, dass** der Umfangssitz (6), der die ringförmige Dichtung (7) aufnimmt, axial auf einer Seite durch den ringförmingen Vorsprung (9) und auf der gegenüberliegenden Seite durch eine axiale Schulter (14) begrenzt ist, welche durch eine Verminderung des Durchmessers der inneren Seitenfläche des hülsenartigen Abschnitts (3) bestimmt ist.

8. Ein Kit, das die Anordnung gemäß einem oder mehreren der obigen Ansprüche und ein Pressverbindungswerkzeug (20) zur Anbringung eines Pressverbinders (1) der Anordnung umfasst, wobei das Pressverbindungswerkzeug (20) ein klemmenartiges Werkzeug mit einem Paar einander gegenüberliegender Backen (22a, 22b) umfasst, die ein im Wesentlichen zylindrisches Loch (23) bestimmen, in welches der hülsenartige Abschnitt (3) des Pressverbinders (1) eingreifen kann, wobei das Loch (23) aus zwei halbzylindrischen Hohlräumen (24a, 24b) besteht, die entsprechend in jeder der Backen (22a, 22b) bestimmt sind, **dadurch gekennzeichnet, dass** sich an der Seitenfläche der halbzylindrischen Hohlräume (24a, 24b) Vorsprünge (25a, 25b, 26a, 26b) befinden, die sich in Umfangsrichtung um die Achse der halbzylindrischen Hohlräume (24a, 24b) erstrecken, wobei die Vorsprünge (25a, 25b, 26a, 26b) axial so voneinander beabstandet sind, dass sie den vordefinierten Eingriffsbereichen (10, 11) entsprechen, um in die vordefinierten Eingriffsbereiche (10, 11) einzugreifen, und wobei ihre freien Enden entlang einer zylindrischen Oberfläche verlängert sind, die einen kleineren Durchmesser hat als der Außendurchmesser des hülsenartigen Abschnitts (3) an den vordefinierten Eingriffsbereichen (10, 11), um beim Festklemmen der Backen (22a, 22b) um den hülsenartigen Abschnitt (3) herum eine plastische Verformung des hülsenartigen Abschnitts (3) zu erzeugen.

9. Das Kit gemäß Anspruch 8, **dadurch gekennzeichnet, dass** jeder der Vorsprünge (25a, 25b, 26a, 26b) der halbzylindrischen Hohlräume (24a, 24b) in eine entsprechende der Umfangsnuten (10, 11) eingreifen kann, die an der äußeren Seitenfläche des hülsenartigen Abschnitts (3) des Pressverbinders (1) bestimmt sind.

10. Das Kit gemäß einem oder mehreren der obigen Ansprüche 8 und 9, **dadurch gekennzeichnet, dass** es Mittel (27) zur Positionierung des klemmenartigen Werkzeugs im Verhältnis zu dem hülsenartigen Abschnitt (3) des Pressverbinders (1) umfasst.

11. Das Kit gemäß Anspruch 10, **dadurch gekennzeichnet, dass** die Positioniermittel (27) einen Arm (28) umfassen, der mit dem klemmenartigen Werkzeug verbunden ist und am axialen Ende des hülsenartigen Abschnitts (3), in welchem die Öffnung (4) bestimmt ist, aufliegen kann.

## Revendications

1. Ensemble constitué d'un raccord à emmanchement par pression (1) et d'un tuyau annelé, dans lequel le raccord à emmanchement par pression (1) comporte un corps de raccord (2) pourvu d'une partie analogue à une douille (3) qui peut être déformée plastiquement à froid et définit, à une extrémité axiale de celle-ci, une ouverture (4) pour l'insertion du tuyau annelé (5), ladite partie analogue à une douille (3) ayant, sur sa surface latérale interne, un logement circonférentiel (6) qui reçoit un joint annulaire (7) agencé autour de l'axe (3a) de ladite partie analogue à une douille (3), dans ledit corps de raccord (2), dans une zone axialement espacée de ladite ouverture (4), étant agencé un épaulement de support axial (8) pour l'extrémité du tuyau annelé (5), qui est inséré dans ladite partie analogue à une douille (3) à travers ladite ouverture (4), dans lequel ladite partie analogue à une douille (3) a, au niveau de ladite ouverture (4), une saillie annulaire (9) qui fait saillie vers l'axe (3a) de ladite partie analogue à une douille (3) et en ce que, sur la surface latérale externe de ladite partie analogue à une douille (3), il existe des zones de prise préétablies (10, 11), qui sont axialement mutuellement espacées l'une de l'autre, pour un outil à emmanchement par pression (20) adapté pour produire une déformation plastique de ladite partie analogue à une douille (3) vers son axe (3a) pour la mise en prise de ladite saillie annulaire (9) dans un évidement (5a) de la surface latérale externe du tuyau annelé (5) et pour la prise dudit joint annulaire (7) avec la surface latérale externe du tuyau annelé (5).

2. Ensemble selon la revendication 1, **caractérisé en ce que** lesdites zones de prise préétablies (10, 11) comportent deux zones de prise préétablies (10, 11) qui sont axialement mutuellement espacées l'une de l'autre sur la surface latérale externe de ladite partie analogue à une douille (3).

3. Ensemble selon les revendications 1 et 2, **caractérisé en ce que** l'une desdites zones de prise préétablies (10, 11) est définie sur ladite saillie annulaire (9) .

4. Ensemble selon une ou plusieurs des revendications précédentes, **caractérisé en ce que** l'une desdites zones de prise préétablies (10, 11) est définie sur ledit logement circonférentiel (6) qui reçoit ledit joint annulaire (7).

5. Ensemble selon une ou plusieurs des revendications précédentes, **caractérisé en ce que** lesdites zones de prise préétablies (10, 11) sont constituées de rainures circonférentielles qui s'étendent autour de l'axe (3a) de ladite partie analogue à une douille (3) et peuvent venir en prise avec ledit outil à emmanchement par pression (20).

6. Ensemble selon une ou plusieurs des revendications précédentes, **caractérisé en ce que** la surface latérale interne dudit joint annulaire (7) est pourvue de saillies circonférentielles (12) qui peuvent venir en prise avec des évidements (5a) de la surface latérale externe du tuyau annelé (5) inséré dans ladite partie analogue à une douille (3).

7. Ensemble selon une ou plusieurs des revendications précédentes, **caractérisé en ce que** ledit logement circonférentiel (6) qui reçoit ledit joint annulaire (7) est délimité axialement, d'un côté, par ladite saillie annulaire (9) et, du côté opposé, par un épaulement axial (14) défini par une réduction de diamètre de la surface latérale interne de ladite partie analogue à une douille (3) .

8. Kit comportant l'ensemble selon une ou plusieurs des revendications précédentes et un outil à emmanchement par pression (20) pour l'application à un raccord à emmanchement par pression (1) de l'ensemble, dans lequel l'outil à emmanchement par pression (20) comporte un outil analogue à une pince ayant une paire de mâchoires mutuellement opposées (22a, 22b) qui définissent un trou sensiblement cylindrique (23) qui peut venir en prise autour de ladite partie analogue à une douille (3) du raccord à emmanchement par pression (1), ledit trou (23) étant composé de deux creux semi-cylindriques (24a, 24b) définis respectivement dans chacune desdites mâchoires (22a, 22b), **caractérisé en ce que** sur la surface latérale desdits creux semi-cylindriques (24a, 24b), il existe des saillies (25a, 25b, 26a, 26b) qui s'étendent de manière circonférentielle autour de l'axe desdits creux semi-cylindriques (24a, 24b), lesdites saillies (25a, 25b, 26a, 26b) étant axialement mutuellement espacées l'une de l'autre de manière à correspondre auxdites zones de prise préétablies (10, 11) afin de venir en prise avec lesdites zones de prise préétablies (10, 11) et leurs extrémités libres s'étendant le long d'une surface cylindrique qui a un diamètre plus petit que le diamètre externe de ladite partie analogue à une douille (3) sur lesdites zones de prise préétablies (10, 11) afin de produire une déformation plastique de ladite partie analogue à une douille (3) lors du serrage desdites mâchoires (22a, 22b) autour de ladite partie analogue à une douille (3).

9. Kit selon la revendication 8, **caractérisé en ce que** chacune desdites saillies (25a, 25b, 26a, 26b) des creux semi-cylindriques (24a, 24b) peut venir en prise dans une rainure correspondante parmi lesdites rainures circonférentielles (10, 11) qui sont définies sur la surface latérale externe de ladite partie analogue à une douille (3) du raccord à emmanchement par pression (1).

10. Kit selon une ou plusieurs des revendications 8 et 9 précédentes, **caractérisé en ce qu'**il comporte des moyens (27) de positionnement dudit outil analogue à une pince par rapport à ladite partie analogue à une douille (3) du raccord à emmanchement par pression (1) .

11. Kit selon la revendication 10, **caractérisé en ce que** lesdits moyens de positionnement (27) comportent un bras (28) qui est associé audit outil analogue à une pince et peut venir en appui contre l'extrémité axiale de ladite partie analogue à une douille (3) dans laquelle ladite ouverture (4) est définie.
